# EUROPÄISCHE PATENTSCHRIFT

(11) **EP 3 596 373 B1**
(45) Veröffentlichungstag und Bekanntmachung des Hinweises auf die Patenterteilung: **08.11.2023**
(21) Anmeldenummer: 18716663.2
(22) Anmeldetag: 14.03.2018
(51) Int. Cl.: F16L 3/13, H02G 3/32, F16L 3/22, H02G 3/04, H02G 3/30

(54) **VORRICHTUNG UND SYSTEM ZUM BEFESTIGEN EINES BZW. MEHRERER WELLROHRE AN EINER FESTEN OBERFLÄCHE**
DEVICE AND SYSTEM FOR FASTENING A OR A PLURALITY OF CORRUGATED TUBES TO A SOLID SURFACE
DISPOSITIF ET SYSTÈME POUR FIXER UN OU PLUSIEURS TUBES ONDULÉS SUR UNE SURFACE RIGIDE

(30) Priorität: 14.03.2017 CH 3102017
(43) Veröffentlichungstag der Anmeldung: 22.01.2020
(73) Patentinhaber: Zehnder Group International AG, 5722 Gränichen (CH)
(72) Erfinder: PISTORIUS, Gabriel, 77654 Offenburg (DE); KLUG, Peter, 77933 Lahr (DE); WESCHLE, Hans-Peter, 77743 Neuried (DE)
(74) Vertreter: Rentsch Partner AG
(86) Internationale Anmeldenummer: PCT/IB2018/051696
(87) Internationale Veröffentlichungsnummer: WO 2018/167683

(56) Entgegenhaltungen:
- EP-A1- 1 209 397
- DE-A1-102006 051 830
- DE-A1-102006 056 415
- KR-A- 20160 044 855

## Beschreibung

Die Erfindung bezieht sich auf eine Vorrichtung zum Halten oder Befestigen eines Wellrohres an einer festen Oberfläche sowie auf ein mehrere derartige Vorrichtungen aufweisendes System zum Halten oder Befestigen mehrerer Wellrohre an einer festen Oberfläche.

Es sind zahlreiche derartige Vorrichtungen und Systeme bekannt, z.B. aus DE 10 2006 051 830 A1 oder EP 1209397 A1.

Der Erfindung liegt die Aufgabe zugrunde, eine Vorrichtung und ein aus solchen Vorrichtungen aufgebautes System zum Halten und Befestigen eines oder mehrerer Wellrohre bereitzustellen, die einen vielseitigen Einsatz und eine leichte Montage ermöglichen.

Zur Lösung dieser Aufgabe stellt die Erfindung eine **Vorrichtung** zum Halten oder Befestigen eines Wellrohres an einer festen Oberfläche vor, wobei die Vorrichtung eine Wellrohr-Einrastformation aufweist, welche zu der Aussenkontur des Wellrohres komplementär ist, wobei die Vorrichtung in einem elastisch nicht verformten Zustand oder in einem ersten elastisch verformten Zustand mit einer ersten Verformung D1 der Vorrichtung mit dem Wellrohr formschlüssig in Eingriff sein kann, und wobei die Vorrichtung beim In-Eingriff-Bringen mit dem Wellrohr und beim Ausser-Eingriff-Bringen mit dem Wellrohr einen zweiten elastisch verformten Zustand mit einer zweiten Verformung D2 der Vorrichtung durchläuft, wobei die zweite elastische Verformung grösser als die erste elastische Verformung ist, d.h. D2 > D1.

Dies ermöglicht eine reversible formschlüssige Verbindung eines Wellrohres mit der erfindungsgemässen Vorrichtung.

Die Wellrohr-Einrastformation enthält erfindungsgemäß einen ersten Schenkel und einen zweiten Schenkel, die in einem Basisbereich der Vorrichtung miteinander einstückig verbunden sind, wobei der erste Schenkel einen ersten Schenkel-Endbereich enthält und der zweite Schenkel einen zweiten Schenkel-Endbereich enthält, wobei die beiden Schenkel-Endbereiche einander gegenüberliegend angeordnet sind, und wobei zwischen dem ersten Schenkel-Endbereich und dem zweiten Schenkel-Endbereich ein Wellrohr unter elastischer Verformung der beiden Schenkel und unter Durchlaufung des zweiten elastisch verformten Zustands mit der zweiten elastischen Verformung D2 mit der Vorrichtung in Eingriff und ausser Eingriff gebracht werden kann.

Zum einen kann dadurch das Wellrohr in die Vorrichtung hineingedrückt werden, wobei man beim Hineindrücken eine Druckkraftschwelle überwinden muss, welche dem Erreichen der zweiten, maximalen elastischen Verformung der beiden Schenkel der Vorrichtung entspricht.

Zum anderen kann dadurch das Wellrohr aus der Vorrichtung herausgezogen werden, wobei man beim Herausziehen eine Zugkraftschwelle überwinden muss, welche dem Erreichen der zweiten, maximalen elastischen Verformung der beiden Schenkel der Vorrichtung entspricht.

Vorzugsweise enthält die Vorrichtung ein Verriegelungsmittel zum Verriegeln der Wellrohr-Einrastformation.

Das Verriegelungsmittel bewirkt, dass selbst beim Erreichen oder Überschreiten der durch die elastische Verformung bedingten Zugkraftschwelle das Wellrohr nicht aus der Vorrichtung herausgerissen wird.

Vorzugsweise enthält das Verriegelungsmittel eine erste Verriegelungs-Formation und eine zweite Verriegelungs-Formation, wobei der erste Schenkel-Endbereich eine zu der ersten Verriegelungsformation komplementäre Verriegelungs-Formation enthält, und der zweite Schenkel-Endbereich eine zu der zweiten Verriegelungsformation komplementäre Verriegelungs-Formation enthält.

Vorzugsweise bilden die erste Verriegelungs-Formation zusammen mit der zu ihr komplementären Verriegelungs-Formation eine erste Verriegelungs-Einrastformation und die zweite Verriegelungs-Formation zusammen mit der zu ihr komplementären Verriegelungs-Formation eine zweite Verriegelungs-Einrastformation.

Dies gewährleistet eine formschlüssige und kraftschlüssige Verbindung zwischen dem Verriegelungsmittel und den beiden Schenkeln, wenn sich ein Wellrohr in der Vorrichtung befindet und darin gehalten wird.

Bei einer vorteilhaften Ausführung enthält die Vorrichtung an der äusseren Seite ihres ersten Schenkels, d.h. an der von einem eingerasteten Wellrohr abgewandten Seite des ersten Schenkels, eine erste Vorrichtung-Verbindungsformation und an der äusseren Seite ihres zweiten Schenkels, d.h. an der von einem eingerasteten Wellrohr abgewandten Seite des zweiten Schenkels, eine zweite Vorrichtung-Verbindungsformation, welche zu der ersten Vorrichtung-Verbindungsformation komplementär ist.

Dies ermöglicht das Verbinden zweier nebeneinander angeordneter benachbarter Vorrichtungen miteinander. So lassen sich mehrere Vorrichtungen und in ihnen gehaltene Wellrohre nebeneinander anordnen und aneinander befestigen. Auf diese Weise kann eine erste Lage aus Vorrichtungen gebildet werden, die mehrere nebeneinander angeordnete Vorrichtungen und Wellrohre enthält.

Die Vorrichtung enthält erfindungsgemäß an der äusseren Seite mindestens eines ihrer beiden Schenkel eine dritte Vorrichtung-Verbindungsformation und in ihrem Basisbereich eine vierte Vorrichtung-Verbindungsformation, welche zu der dritten Vorrichtung-Verbindungsformation komplementär ist.

Dies ermöglicht das Verbinden einer ersten Vorrichtung mit einer seitlich versetzt über ihr angeordneten zweiten Vorrichtung. So können eine erste Lage aus Vorrichtungen und eine zweite Lage aus Vorrichtungen miteinander verbunden werden, wobei die Vorrichtungen der ersten Lage und die Vorrichtungen der zweiten Lage versetzt zueinander («auf Lücke») angeordnet sind. Auf diese Weise lassen sich mehrere übereinander angeordnete Lagen von Vorrichtungen und in ihnen gehaltene Wellrohre miteinander verbinden und zu einem Stapel oder Paket anordnen. Da benachbarte Vorrichtungen innerhalb einer Lage sowie benachbarte Vorrichtungen einer ersten Lage und einer zweiten Lage miteinander verbunden sind, lassen sich Wellrohr-Pakete bilden.

Ein minimales Wellrohr-Paket ist ein Paket, welches zwei nebeneinander angeordnete Wellrohre enthält und nur eine Lage aus Wellrohren aufweist.

Ein nächstgrösseres Wellrohr-Paket ist ein Paket, welches zwei nebeneinander angeordnete Wellrohre in einer ersten Lage enthält und zusätzlich ein drittes Wellrohr oberhalb und zwischen den beiden ersten Wellrohren in einerzweiten Lage enthält, die sich über der ersten Lage befindet.

Ein wiederum nächstgrösseres Wellrohr-Paket ist ein Paket, welches drei nebeneinander angeordnete Wellrohre in einer ersten Lage enthält, zwei nebeneinander angeordnete Wellrohre in einer zweiten Lage enthält und ein drittes Wellrohr in einer dritten Lage enthält.

Vorzugsweise hat die Vorrichtung an der inneren Seite ihres ersten Schenkels, d.h. an der einem eingerasteten Wellrohr zugewandten Seite des ersten Schenkels, eine erste Innen-Einrastrippe, die in eine Wellrohr-Vertiefung eines in der Vorrichtung eingerasteten Wellrohrs eingreift.

Durch die erste Innen-Einrastrippe wird gewährleistet, dass ein in der Vorrichtung gehaltenes Wellrohr entlang der Axialrichtung des Wellrohrs nicht verschoben werden kann, d.h. eine Fixierung des Wellrohrs in Axialrichtung wird erzeugt.

Vorzugsweise hat die Vorrichtung an der inneren Seite ihres zweiten Schenkels, d.h. an der einem eingerasteten Wellrohr zugewandten Seite des zweiten Schenkels, eine zweite Innen-Einrastrippe, die in eine Wellrohr-Vertiefung eines in der Vorrichtung eingerasteten Wellrohrs eingreift.

Die zweite Innen-Einrastrippe trägt ebenfalls dazu bei, dass ein in der Vorrichtung gehaltenes Wellrohr entlang der Axialrichtung des Wellrohrs nicht verschoben werden kann, d.h. eine noch stärkere Fixierung des Wellrohres in Axialrichtung wird erzeugt.

Vorzugsweise hat die Vorrichtung an der äusseren Seite ihres ersten Schenkels, d.h. an der einem eingerasteten Wellrohr abgewandten Seite des ersten Schenkels, eine erste Aussen-Einrastrippe, die in eine Wellrohr-Vertiefung eines Wellrohrs eingreifen kann.

Durch die erste Aussen-Einrastrippe wird gewährleistet, dass ein in einer benachbarten Vorrichtung einer benachbarten Lage gehaltenes Wellrohr entlang der Axialrichtung des Wellrohrs nicht verschoben werden kann, d.h. eine Fixierung eines ersten benachbarten Wellrohrs in Axialrichtung wird erzeugt.

Vorzugsweise hat die Vorrichtung an der äusseren Seite ihres zweiten Schenkels, d.h. an der einem eingerasteten Wellrohr abgewandten Seite des zweiten Schenkels, eine zweite Aussen-Einrastrippe, die in eine Wellrohr-Vertiefung eines Wellrohrs eingreifen kann.

Durch die zweite Aussen-Einrastrippe wird gewährleistet, dass ein in einer benachbarten Vorrichtung einer benachbarten Lage gehaltenes Wellrohr entlang der Axialrichtung des Wellrohrs nicht verschoben werden kann, d.h. eine Fixierung eines zweiten benachbarten Wellrohrs in Axialrichtung wird erzeugt.

Vorzugsweise ist bei der Vorrichtung die Wellrohr-Einrastformation zur Aussenkontur eines Wellrohres mit kreisförmigem Querschnitt komplementär.

Dadurch wird in der Verbindung zwischen einem Wellrohr mit kreisförmigem Querschnitt und der Vorrichtung der Formschluss und der Kraftschluss/Reibschluss verstärkt.

Vorzugsweise ist bei der Vorrichtung die Wellrohr-Einrastformation zur Aussenkontur eines Wellrohres mit rechteckförmigem Querschnitt komplementär.

Dadurch wird in der Verbindung zwischen einem Wellrohr mit rechteckförmigem Querschnitt und der Vorrichtung der Formschluss und der Kraftschluss/Reibschluss verstärkt.

Vorzugsweise ist bei der Vorrichtung die Wellrohr-Einrastformation zur Aussenkontur eines Wellrohres komplementär, das einen stadionförmigen oder rennbahnförmigen Querschnitt bzw. einen Querschnitt in Form eines Rechtecks mit abgerundeten Ecken hat.

Dadurch wird in der Verbindung zwischen einem Wellrohr, dessen Querschnitt die Form eines Rechtecks mit abgerundeten Ecken hat, und der Vorrichtung der Formschluss und der Kraftschluss/Reibschluss verstärkt.

Vorzugsweise hat die Vorrichtung an der äusseren Seite ihres Basisbereichs eine vordere Befestigungslasche, die sich in eine erste Richtung von der Vorrichtung weg erstreckt. Vorzugsweise hat die Vorrichtung an der äusseren Seite ihres Basisbereichs eine hintere Befestigungslasche, die sich in eine zu der ersten Richtung entgegengesetzte zweite Richtung von der Vorrichtung weg erstreckt.

Dadurch kann die Vorrichtung an einer Wand, an einer Decke oder an einem Boden befestigt werden. Bei Verwendung einer Vorrichtung mit vorderer Befestigungslasche und hinterer Befestigungslasche kann eine stabilere Befestigung erzielt werden.

Vorzugsweise hat die vordere Befestigungslasche mindestens zwei Befestigungslöcher. Vorzugsweise hat die hintere Befestigungslasche mindestens zwei Befestigungslöcher.

Dadurch kann die Vorrichtung an einer Wand, an einer Decke oder an einem Boden besonders verdrehsicher befestigt werden. Bei Verwendung einer Vorrichtung mit vorderer Befestigungslasche und hinterer Befestigungslasche mit jeweils zwei Befestigungslöchern kann eine besonders stabile verdrehsichere Befestigung erzielt werden.

Bei einer besonders bevorzugten Ausführung ist die Vorrichtung aus einem Polymermaterial, insbesondere aus einem faserverstärkten Polymermaterial gefertigt.

Die hohe Steifigkeit (hoher E-Modul) und die hohe Bruchfestigkeit faserverstärkter Polymermaterialien ermöglichen es, die erfindungsgemässe Vorrichtung mit filigranen und dennoch ausreichend steifen und bruchfesten Strukturen zu versehen.

Die Erfindung stellt auch ein **System,** gemäß Anspruch 12, bereit zum Halten oder Befestigen mehrerer Wellrohre an einer festen Oberfläche, wobei das System mehrere miteinander verbundene Vorrichtungen der weiter oben beschriebenen Bauarten aufweist.

Vorzugsweise enthält das System mehrere nebeneinander angeordnete Vorrichtungen, wobei aneinandergrenzende Vorrichtungen jeweils mittels einer ersten Vorrichtung-Verbindungsformation einer ersten Vorrichtung und mittels einer zweiten Vorrichtung-Verbindungsformation einer benachbarten Vorrichtung, welche zu der ersten Vorrichtung-Verbindungsformation komplementär ist, miteinander verbunden sind.

Dies ermöglicht das Verbinden zweier nebeneinander angeordneter benachbarter Vorrichtungen miteinander. So lassen sich mehrere Vorrichtungen und in ihnen gehaltene Wellrohre nebeneinander anordnen und aneinander befestigen. Auf diese Weise kann eine erste Lage aus Vorrichtungen gebildet werden, die mehrere nebeneinander angeordnete Vorrichtungen und Wellrohre enthält.

Vorzugsweise enthält das System mehrere übereinander angeordnete Vorrichtungen, wobei aneinandergrenzende Vorrichtungen jeweils mittels der dritten Vorrichtung-Verbindungsformation einer ersten Vorrichtung und mittels der vierten Vorrichtung-Verbindungsformation einer benachbarten Vorrichtung, welche zu der dritten Vorrichtung-Verbindungsformation komplementär ist, miteinander verbunden sind.

Dies ermöglicht das Verbinden einer ersten Vorrichtung mit einer seitlich versetzt über ihr angeordneten zweiten Vorrichtung. So können eine erste Lage aus Vorrichtungen und eine zweite Lage aus Vorrichtungen miteinander verbunden werden. Dabei sind die Vorrichtungen der ersten Lage und die Vorrichtungen der zweiten Lage zueinander versetzt angeordnet. So lassen sich mehrere übereinander angeordnete Lagen von Vorrichtungen und in ihnen gehaltene Wellrohre miteinander verbinden und zu einem Stapel oder Paket anordnen. Benachbarte Vorrichtungen innerhalb einer Lage sowie benachbarte Vorrichtungen einer ersten Lage und einer zweiten Lage können miteinander verbunden werden, wodurch man Wellrohr-Pakete bilden kann.

Weitere Vorteile, Merkmale und Anwendungsmöglichkeiten der Erfindung ergeben sich aus der nun folgenden Beschreibung bevorzugter Ausführungsbeispiele der Erfindung anhand der Zeichnung. Es zeigen:
Fig 1 eine erste Ansicht eines ersten Ausführungsbeispiels der erfindungsgemässen Vorrichtung;
Fig 2 eine zweite Ansicht des ersten Ausführungsbeispiels;
Fig 3 eine dritte Ansicht des ersten Ausführungsbeispiels;
Fig 4 eine vierte Ansicht des ersten Ausführungsbeispiels;
Fig 5 eine fünfte Ansicht des ersten Ausführungsbeispiels;
Fig. 6A, 6B, 6C mehrere Schritte einer ersten Art der Befestigung des ersten Ausführungsbeispiels der erfindungsgemässen Vorrichtung;
Fig. 7A, 7B, 7C mehrere Schritte einer zweiten Art der Befestigung des ersten Ausführungsbeispiels der erfindungsgemässen Vorrichtung;
Fig. 8A1, 8A2, 8A3, 8B, 8C1, 8C2, 8C3, 8D mehrere Schritte zum Befestigen eines Wellrohres in dem ersten Ausführungsbeispiel der erfindungsgemässen Vorrichtung;
Fig. 9A, 9B, 9C1, 9C2 mehrere Schritte zum Befestigen mehrerer erfindungsgemässer Vorrichtungen des ersten Ausführungsbeispiels aneinander zu einer ersten Anordnung;
Fig. 10A, 10B, 10C, 10D, 10E, 10F mehrere Schritte zum Befestigen mehrerer erfindungsgemässer Vorrichtungen des ersten Ausführungsbeispiels aneinander zu einer zweiten Anordnung und einer dritten Anordnung;
Fig. 11A, 11B einen ersten Schritt zum Entfernen eines Wellrohres aus dem ersten Ausführungsbeispiel der erfindungsgemässen Vorrichtung;
Fig 12 eine erste Ansicht eines zweiten Ausführungsbeispiels der erfindungsgemässen Vorrichtung;
Fig 13 eine zweite Ansicht des zweiten Ausführungsbeispiels;
Fig 14 eine dritte Ansicht des zweiten Ausführungsbeispiels;
Fig 15 eine vierte Ansicht des zweiten Ausführungsbeispiels;
Fig. 16A, 16B, 16C mehrere Schritte einer ersten Art der Befestigung des zweiten Ausführungsbeispiels der erfindungsgemässen Vorrichtung;
Fig. 17A1, 17A2, 17A3, 17B1, 17B2, 17C1, 17C2 mehrere Schritte zum Befestigen eines Wellrohres in dem zweit Ausführungsbeispiel der erfindungsgemässen Vorrichtung;
Fig. 18A, 18B1, 18B2 mehrere Schritte zum Befestigen mehrerer erfindungsgemässer Vorrichtungen des zweiten Ausführungsbeispiels aneinander zu einer ersten Anordnung;
Fig. 19A, 19B, 19C, 19D, 19E, 19F mehrere Schritte zum Befestigen mehrerer erfindungsgemässer Vorrichtungen des zweiten Ausführungsbeispiels aneinander zu einer dritten Anordnung;
Fig. 20A, 20B einen ersten Schritt zum Entfernen eines Wellrohres aus dem zweiten Ausführungsbeispiel der erfindungsgemässen Vorrichtung;
Fig 21 eine erste Ansicht eines dritten Ausführungsbeispiels einer nicht erfindungsgemässen Vorrichtung;
Fig 22 eine zweite Ansicht des dritten Ausführungsbeispiels;
Fig 23 eine dritte Ansicht des dritten Ausführungsbeispiels;
Fig. 24A, 24B, 24C mehrere Schritte einer ersten Art der Befestigung des dritten Ausführungsbeispiel der nicht erfindungsgemässen Vorrichtung;
Fig. 25A, 25B, 25C mehrere Schritte einer zweiten Art der Befestigung des dritten Ausführungsbeispiel der nicht erfindungsgemässen Vorrichtung;
Fig. 26A1, 26A2, 26A3, 26B, 26C mehrere Schritte zum Befestigen eines Wellrohres in dem dritten Ausführungsbeispiel der nicht erfindungsgemässen Vorrichtung;
Fig. 27A, 27B, 27C mehrere Schritte zum Befestigen mehrerer nicht erfindungsgemässer Vorrichtungen des dritten Ausführungsbeispiels aneinander zu einer ersten Anordnung und einer zweiten Anordnung.

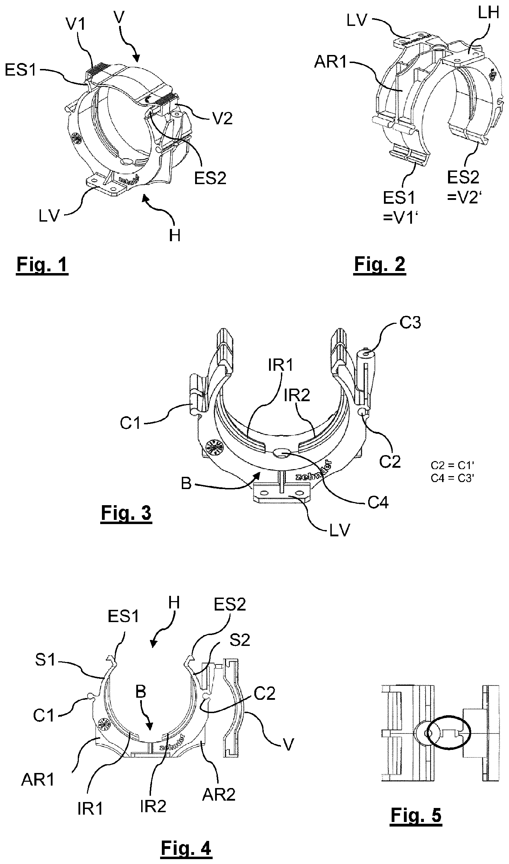

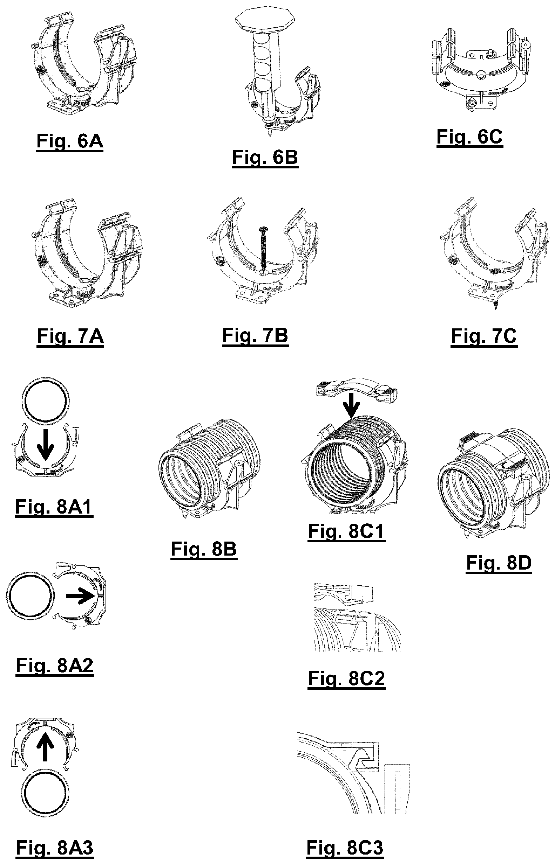

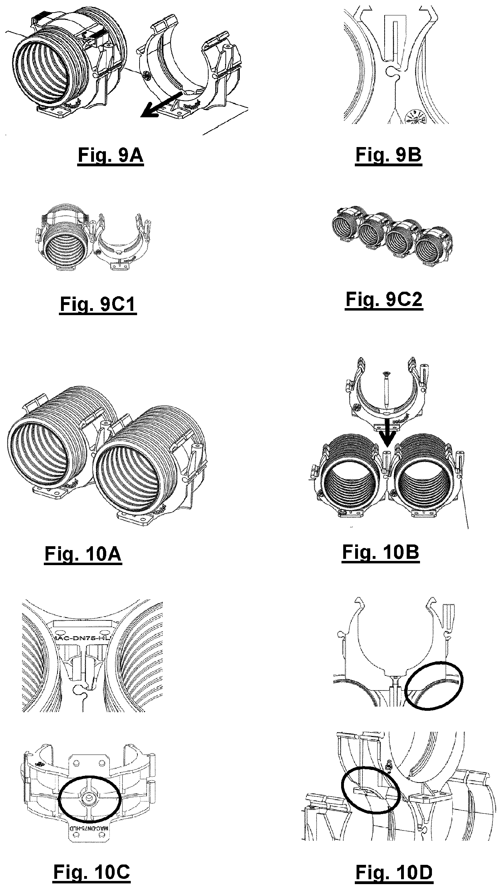

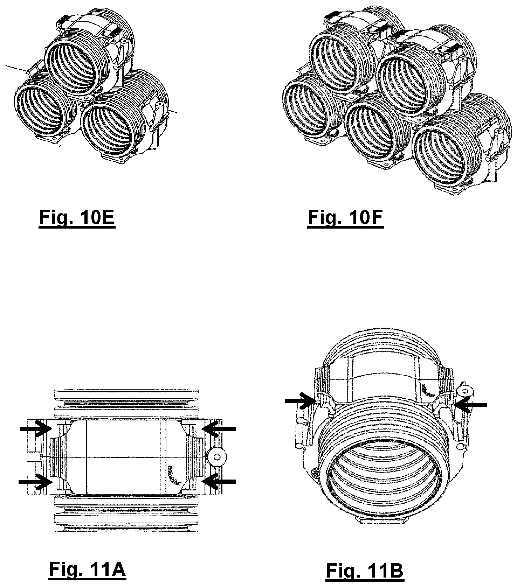

In Fig 1, 2, 3, 4, 5 sind eine erste, eine zweite, eine dritte, eine vierte und eine fünfte Ansicht eines ersten Ausführungsbeispiels der erfindungsgemässen Vorrichtung H gezeigt. Die Vorrichtung H dient zum Halten oder Befestigen eines Wellrohres W (siehe Fig. 8, 9, 10, 11) mit kreisförmigem Querschnitt an einer festen Oberfläche F (siehe Fig. 9). Die Vorrichtung H hat eine Wellrohr-Einrastformation S1, S2, welche zu der Aussenkontur C des Wellrohres W komplementär ist. Die Vorrichtung H kann in einem elastisch nicht verformten Zustand oder in einem ersten elastisch verformten Zustand mit einer ersten Verformung D1 mit dem Wellrohr W formschlüssig in Eingriff sein, wobei die Vorrichtung H beim In-Eingriff-Bringen mit dem Wellrohr W und beim Ausser-Eingriff-Bringen mit dem Wellrohr W einen zweiten elastisch verformten Zustand mit einer zweiten Verformung D2 durchläuft. Dabei ist die zweite elastische Verformung D2 grösser als die erste elastische Verformung D1.

Die Wellrohr-Einrastformation S1, S2 hat einen ersten Schenkel S1 und einen zweiten Schenkel S2, die in einem Basisbereich B der Vorrichtung H miteinander einstückig verbunden sind, wobei der erste Schenkel S1 einen ersten Schenkel-Endbereich ES1 aufweist und der zweite Schenkel S2 einen zweiten Schenkel-Endbereich ES2 aufweist. Die beiden Schenkel-Endbereiche ES1, ES2 sind einander gegenüberliegend angeordnet. Zwischen dem ersten Schenkel-Endbereich ES1 und dem zweiten Schenkel-Endbereich ES2 kann ein Wellrohr W unter elastischer Verformung der beiden Schenkel S1, S2 und unter Durchlaufung des zweiten elastisch verformten Zustands mit der zweiten elastischen Verformung D2 mit der Vorrichtung H in Eingriff und ausser Eingriff gebracht werden.

Die Vorrichtung H hat ein Verriegelungsmittel V zum Verriegeln der Wellrohr-Einrastformation S1, S2. Das Verriegelungsmittel V hat eine erste Verriegelungs-Formation V1 und eine zweite Verriegelungs-Formation V2. Der erste Schenkel-Endbereich ES1 hat eine zu der ersten Verriegelungsformation V1 komplementäre Verriegelungs-Formation V1'. Der zweite Schenkel-Endbereich ES2 hat eine zu der zweiten Verriegelungsformation V2 komplementäre Verriegelungs-Formation V2'. Die erste Verriegelungs-Formation V1 zusammen mit der zu ihr komplementären Verriegelungs-Formation V1' bildet eine erste Verriegelungs-Einrastformation V1-V1'. Die zweite Verriegelungs-Formation V2 bildet zusammen mit der zu ihr komplementären Verriegelungs-Formation V2' eine zweite Verriegelungs-Einrastformation V2-V2'.

Die Vorrichtung H hat an der äusseren Seite ihres ersten Schenkels 51, d.h. an der von einem eingerasteten Wellrohr W abgewandten Seite des ersten Schenkels S1, eine erste Vorrichtung-Verbindungsformation C1 und an der äusseren Seite ihres zweiten Schenkels S2, d.h. an der von einem eingerasteten Wellrohr W abgewandten Seite des zweiten Schenkels S2, eine zweite Vorrichtung-Verbindungsformation C2, welche zu der ersten Vorrichtung-Verbindungsformation C1 komplementär ist (C2 = C1').

Die Vorrichtung H hat an der äusseren Seite mindestens eines ihrer beiden Schenkel S1, S2 eine dritte Vorrichtung-Verbindungsformation C3 und in ihrem Basisbereich B eine vierte Vorrichtung-Verbindungsformation C4 aufweist, welche zu der dritten Vorrichtung-Verbindungsformation C3 komplementär ist (C4 = C3').

Die Vorrichtung H hat an der inneren Seite ihres ersten Schenkels S1, d.h. an der einem eingerasteten Wellrohr W zugewandten Seite des ersten Schenkels S1, eine erste Innen-Einrastrippe IR1, die in eine Wellrohr-Vertiefung eines in der Vorrichtung H eingerasteten Wellrohrs W eingreift.

Die Vorrichtung H hat an der inneren Seite ihres zweiten Schenkels S2, d.h. an der einem eingerasteten Wellrohr W zugewandten Seite des zweiten Schenkels S2, eine zweite Innen-Einrastrippe IR2, die in eine Wellrohr-Vertiefung eines in der Vorrichtung H eingerasteten Wellrohrs W eingreift.

Die Vorrichtung H hat an der äusseren Seite ihres ersten Schenkels S1, d.h. an der einem eingerasteten Wellrohr W abgewandten Seite des ersten Schenkels S1, eine erste Aussen-Einrastrippe AR1, die in eine Wellrohr-Vertiefung eines Wellrohrs W eingreifen kann.

Die Vorrichtung H hat an der äusseren Seite ihres zweiten Schenkels S2, d.h. an der einem eingerasteten Wellrohr W abgewandten Seite des zweiten Schenkels S2, eine zweite Aussen-Einrastrippe AR2, die in eine Wellrohr-Vertiefung eines Wellrohrs W eingreifen kann.

Die Wellrohr-Einrastformation S1, S2 ist zur Aussenkontur C eines Wellrohres W mit kreisförmigem Querschnitt komplementär.

Die Vorrichtung H hat an der äusseren Seite ihres Basisbereichs B eine vordere Befestigungslasche LV, die sich in eine erste Richtung von der Vorrichtung H weg erstreckt.

Die Vorrichtung H hat an der äusseren Seite ihres Basisbereichs B eine hintere Befestigungslasche LH, die sich in eine zu der ersten Richtung entgegengesetzte zweite Richtung von der Vorrichtung H weg erstreckt.

Die vordere Befestigungslasche LV und die hintere Befestigungslasche LH haben jeweils zwei Befestigungslöcher.

Die Vorrichtung H ist aus einem Polymermaterial, insbesondere aus einem faserverstärkten Polymermaterial gefertigt.

In **Fig 6, 7, 8****,** **9****,** **10****,** **11** sind Anwendungsmöglichkeiten und die Handhabung des ersten Ausführungsbeispiels der erfindungsgemässen Vorrichtung H gezeigt.

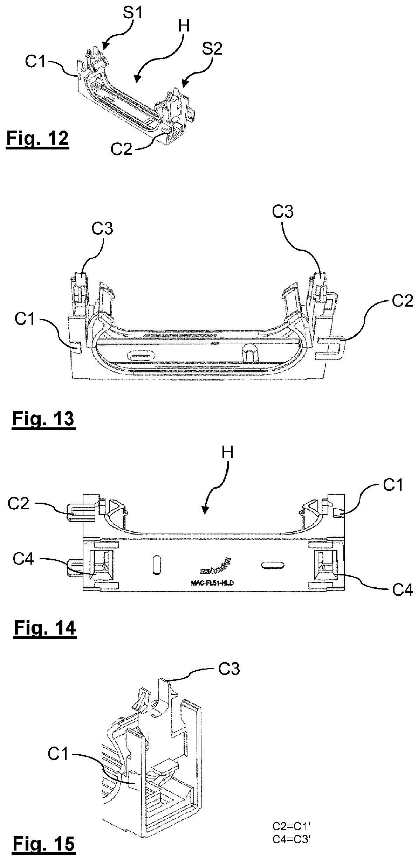

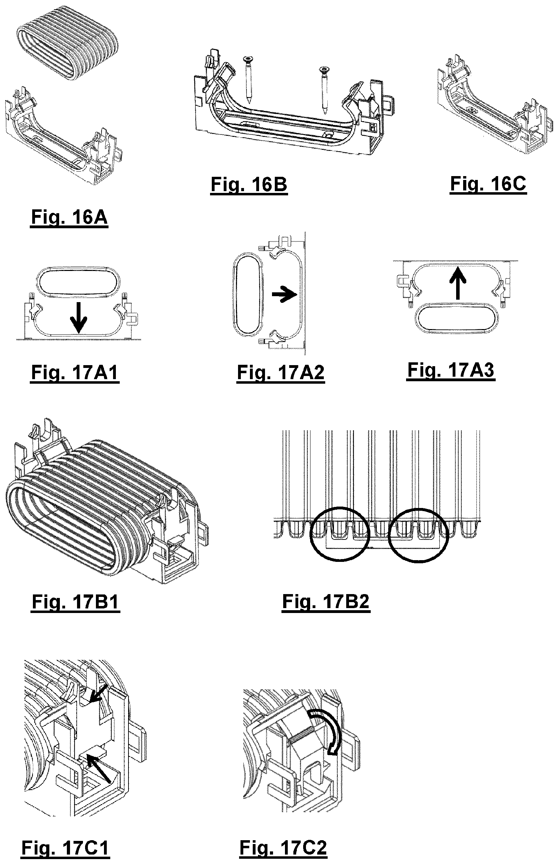

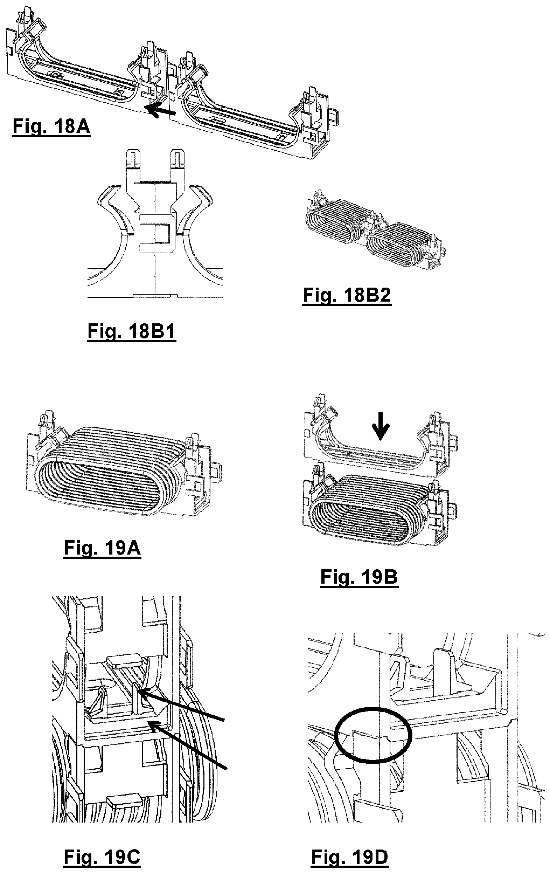

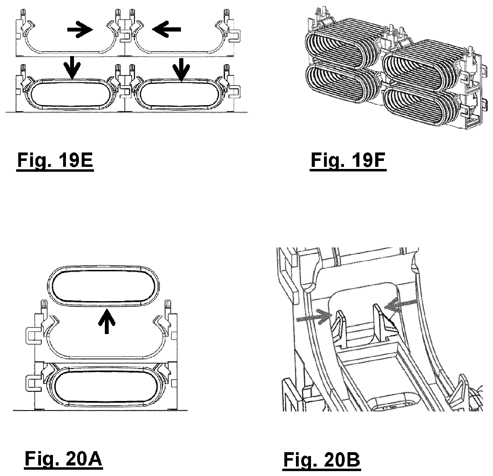

In Fig 12, 13, 14, 15 sind eine erste, eine zweite, eine dritte und eine vierte Ansicht eines zweiten Ausführungsbeispiels der erfindungsgemässen Vorrichtung H gezeigt. Die Vorrichtung H dient zum Halten oder Befestigen eines Wellrohres W (siehe Fig. 16, 17, 18, 19, 20), das einen stadionförmigen oder rennbahnförmigen Querschnitt bzw. einen Querschnitt in Form eines Rechtecks mit abgerundeten Ecken hat. Die Vorrichtung H hat eine Wellrohr-Einrastformation S1, S2, welche zu der Aussenkontur C des Wellrohres W komplementär ist. Die Vorrichtung H kann in einem elastisch nicht verformten Zustand oder in einem ersten elastisch verformten Zustand mit einer ersten Verformung D1 mit dem Wellrohr W formschlüssig in Eingriff sein, wobei die Vorrichtung H beim In-Eingriff-Bringen mit dem Wellrohr W und beim Ausser-Eingriff-Bringen mit dem Wellrohr W einen zweiten elastisch verformten Zustand mit einer zweiten Verformung D2 durchläuft. Dabei ist die zweite elastische Verformung D2 grösser als die erste elastische Verformung D1.

Die Wellrohr-Einrastformation S1, S2 hat einen ersten Schenkel S1 und einen zweiten Schenkel S2, die in einem Basisbereich B der Vorrichtung H miteinander einstückig verbunden sind.

Die Vorrichtung H hat an der äusseren Seite ihres ersten Schenkels 51, d.h. an der von einem eingerasteten Wellrohr W abgewandten Seite des ersten Schenkels S1, eine erste Vorrichtung-Verbindungsformation C1 und an der äusseren Seite ihres zweiten Schenkels S2, d.h. an der von einem eingerasteten Wellrohr W abgewandten Seite des zweiten Schenkels S2, eine zweite Vorrichtung-Verbindungsformation C2, welche zu der ersten Vorrichtung-Verbindungsformation C1 komplementär ist (C2 = C1').

Die Vorrichtung H hat an der äusseren Seite mindestens eines ihrer beiden Schenkel S1, S2 eine dritte Vorrichtung-Verbindungsformation C3 und in ihrem Basisbereich B eine vierte Vorrichtung-Verbindungsformation C4 aufweist, welche zu der dritten Vorrichtung-Verbindungsformation C3 komplementär ist (C4 = C3').

Die Wellrohr-Einrastformation S1, S2 ist zur Aussenkontur C eines Wellrohres W komplementär, das einen stadionförmigen oder rennbahnförmigen Querschnitt bzw. einen Querschnitt in Form eines Rechtecks mit abgerundeten Ecken hat.

Die Vorrichtung H ist aus einem Polymermaterial, insbesondere aus einem faserverstärkten Polymermaterial gefertigt.

In **Fig 16, 17****,** **18****,** **19****,** **20** sind Anwendungsmöglichkeiten und die Handhabung des zweiten Ausführungsbeispiels der erfindungsgemässen Vorrichtung H gezeigt.

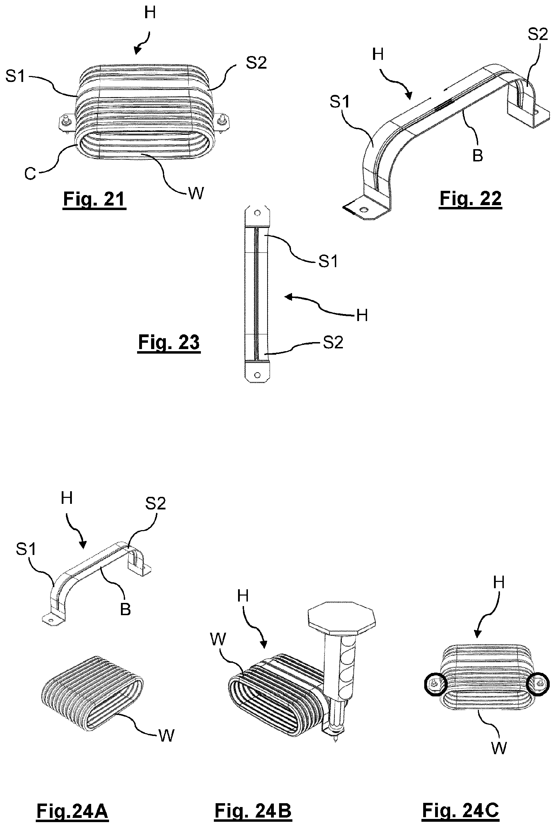

In **Fig 21, 22, 23** sind eine erste, eine zweite und eine dritte Ansicht eines zweiten Ausführungsbeispiels der erfindungsgemässen Vorrichtung H gezeigt. Die Vorrichtung H dient zum Halten oder Befestigen eines Wellrohres W (siehe Fig. 21), das einen stadionförmigen oder rennbahnförmigen Querschnitt bzw. einen Querschnitt in Form eines Rechtecks mit abgerundeten Ecken hat. Die Vorrichtung H hat eine Wellrohr-Einrastformation S1, S2, welche zu der Aussenkontur C des Wellrohres W komplementär ist. Die Vorrichtung H kann in einem elastisch nicht verformten Zustand oder in einem ersten elastisch verformten Zustand mit einer ersten Verformung D1 mit dem Wellrohr W formschlüssig in Eingriff sein, wobei die Vorrichtung H beim In-Eingriff-Bringen mit dem Wellrohr W und beim Ausser-Eingriff-Bringen mit dem Wellrohr W einen zweiten elastisch verformten Zustand mit einer zweiten Verformung D2 durchläuft. Dabei ist die zweite elastische Verformung D2 grösser als die erste elastische Verformung D1.

Die Wellrohr-Einrastformation S1, S2 hat einen ersten Schenkel S1 und einen zweiten Schenkel S2, die in einem Basisbereich B der Vorrichtung H miteinander einstückig verbunden sind.

Die Wellrohr-Einrastformation S1, S2 ist zur Aussenkontur C eines Wellrohres W komplementär, das einen stadionförmigen oder rennbahnförmigen Querschnitt bzw. einen Querschnitt in Form eines Rechtecks mit abgerundeten Ecken hat.

Die Vorrichtung H ist aus Metall, insbesondere Stahl, oder aus einem Polymermaterial, insbesondere aus einem faserverstärkten Polymermaterial, gefertigt.

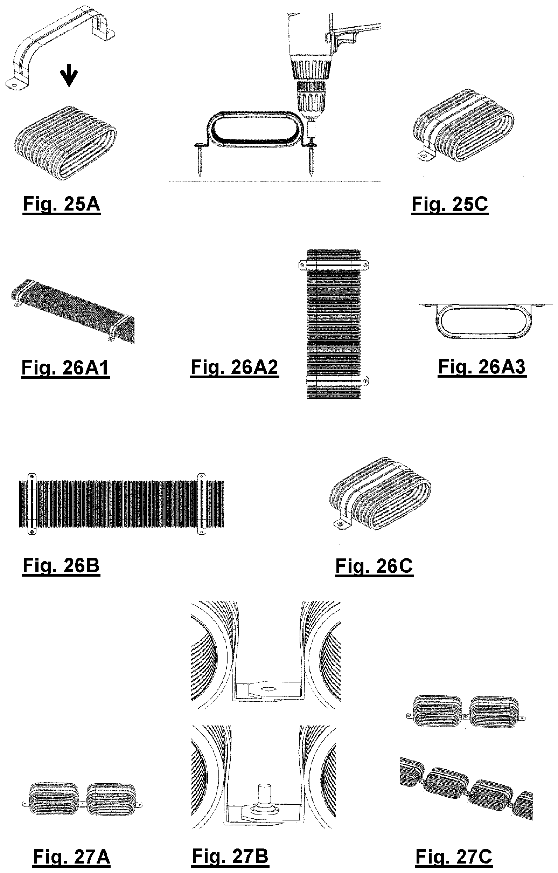

In **Fig 24****,** **25, 26, 27** sind Anwendungsmöglichkeiten und die Handhabung des dritten Ausführungsbeispiels einer nicht erfindungsgemässen Vorrichtung H gezeigt.

### Bezugszeichenliste

- H: Vorrichtung zum Halten/Befestigen bzw. Rohrhalter
- F: feste Oberfläche
- 51: erster Schenkel
- S2: zweiter Schenkel
- 51, S2: Wellrohr-Einrastformation
- C: Aussenkontur
- W: Wellrohr
- B: Basisbereich
- ES1: Schenkel-Endbereich des ersten Schenkels
- ES2: Schenkel-Endbereich des zweiten Schenkels
- V: Verriegelungsmittel
- V1: erste Verriegelungs-Formation
- V2: zweite Verriegelungs-Formation
- V1': zu V1 komplementäre Verriegelungs-Formation
- V2': zu V2 komplementäre Verriegelungs-Formation
- V1-V1': erste Verriegelungs-Einrastformation
- V2-V2': zweite Verriegelungs-Einrastformation
- C1: erste Vorrichtung-Verbindungsformation
- C2: zweite Vorrichtung-Verbindungsformation
- C3: dritte Vorrichtung-Verbindungsformation
- C4: vierte Vorrichtung-Verbindungsformation
- IR1: erste Innen-Einrastrippe
- IR2: zweite Innen-Einrastrippe
- AR1: erste Aussen-Einrastrippe
- AR2: zweite Aussen-Einrastrippe
- LV: vordere Befestigungslasche
- HV: hintere Befestigungslasche

## Patentansprüche

1. Vorrichtung (H) zum Halten oder Befestigen eines Wellrohres (W) an einer festen Oberfläche (F), wobei die Vorrichtung (H) eine Wellrohr-Einrastformation (S1, S2) aufweist, welche zu der Aussenkontur (C) des Wellrohres (W) komplementär ist, wobei die Vorrichtung (H) in einem elastisch nicht verformten Zustand oder in einem ersten elastisch verformten Zustand mit einer ersten Verformung D1 mit dem Wellrohr (W) formschlüssig in Eingriff sein kann, und wobei die Vorrichtung (H) beim In-Eingriff-Bringen mit dem Wellrohr (W) und beim Ausser-Eingriff-Bringen mit dem Wellrohr (W) einen zweiten elastisch verformten Zustand mit einer zweiten Verformung D2 durchläuft, wobei die zweite elastische Verformung D2 grösser als die erste elastische Verformung D1 ist; wobei die Wellrohr-Einrastformation (S1, S2) einen ersten Schenkel (S1) und einen zweiten Schenkel (S2) aufweist, die in einem Basisbereich (B) der Vorrichtung (H) miteinander einstückig verbunden sind, wobei der erste Schenkel (S1) einen ersten Schenkel-Endbereich (ES1) aufweist und der zweite Schenkel (S2) einen zweiten Schenkel-Endbereich (ES2) aufweist, wobei die beiden Schenkel-Endbereiche (ES1, ES2) einander gegenüberliegend angeordnet sind, und wobei zwischen dem ersten Schenkel-Endbereich (ES1) und dem zweiten Schenkel-Endbereich (ES2) ein Wellrohr (W) unter elastischer Verformung der beiden Schenkel (S1, S2) und unter Durchlaufung des zweiten elastisch verformten Zustands mit der zweiten elastischen Verformung D2 mit der Vorrichtung (H) in Eingriff und ausser Eingriff gebracht werden kann; **dadurch gekennzeichnet, dass** die Vorrichtung (H) an der äusseren Seite mindestens eines ihrer beiden Schenkel (S1, S2) eine dritte Vorrichtung-Verbindungsformation (C3) aufweist und in ihrem Basisbereich (B) eine vierte Vorrichtung-Verbindungsformation (C4) aufweist, welche zu der dritten Vorrichtung- Verbindungsformation (C3) komplementär ist und das Verbinden der Vorrichtung mit der dritten Vorrichtung-Verbindungsformation (C3) einer unter ihr seitlich versetzt angeordneten zweiten Vorrichtung ermöglicht.

2. Vorrichtung (H) nach Anspruch 1, **dadurch gekennzeichnet, dass** die Vorrichtung (H) ein Verriegelungsmittel (V) zum Verriegeln der Wellrohr-Einrastformation (S1, S2) aufweist.

3. Vorrichtung (H) nach Anspruch 2, **dadurch gekennzeichnet, dass** das Verriegelungsmittel (V) eine erste Verriegelungs-Formation (V1) und eine zweite Verriegelungs-Formation (V2) aufweist, dass der erste Schenkel-Endbereich (ES1) eine zu der ersten Verriegelungsformation (V1) komplementäre Verriegelungs-Formation (V1') aufweist, und dass der zweite Schenkel-Endbereich (ES2) eine zu der zweiten Verriegelungsformation (V2) komplementäre Verriegelungs-Formation (V2') aufweist.

4. Vorrichtung (H) nach Anspruch 3, **dadurch gekennzeichnet, dass** die erste Verriegelungs- Formation (V1) zusammen mit der zu ihr komplementären Verriegelungs-Formation (V1') eine erste Verriegelungs-Einrastformation (V1-V1') bilden und die zweite Verriegelungs- Formation (V2) zusammen mit der zu ihr komplementären Verriegelungs-Formation (V2') eine zweite Verriegelungs-Einrastformation (V2-V2') bilden.

5. Vorrichtung (H) nach einem der Ansprüche 1 bis 4, **dadurch gekennzeichnet, dass** die Vorrichtung (H) an der äusseren Seite ihres ersten Schenkels (S1), d.h. an der von einem eingerasteten Wellrohr (W) abgewandten Seite des ersten Schenkels (S1), eine erste Vorrichtung-Verbindungsformation (C1) aufweist und an der äusseren Seite ihres zweiten Schenkels (S2), d.h. an der von einem eingerasteten Wellrohr (W) abgewandten Seite des zweiten Schenkels (S2), eine zweite Vorrichtung-Verbindungsformation (C2) aufweist, welche zu der ersten Vorrichtung-Verbindungsformation (C1) komplementär ist.

6. Vorrichtung (H) nach einem der Ansprüche 1 bis 5, **dadurch gekennzeichnet, dass** die Vorrichtung (H) an der inneren Seite ihres ersten Schenkels (S1), d.h. an der einem eingerasteten Wellrohr (W) zugewandten Seite des ersten Schenkels (S1), eine erste Innen- Einrastrippe (IR1) aufweist, die in eine Wellrohr-Vertiefung eines in der Vorrichtung (H) eingerasteten Wellrohrs (W) eingreift.

7. Vorrichtung (H) nach Anspruch 6, **dadurch gekennzeichnet, dass** die Vorrichtung (H) an der inneren Seite ihres zweiten Schenkels (S2), d.h. an der einem eingerasteten Wellrohr (W) zugewandten Seite des zweiten Schenkels (S2), eine zweite Innen-Einrastrippe (IR2) aufweist, die in eine Wellrohr-Vertiefung eines in der Vorrichtung (H) eingerasteten Wellrohrs (W) eingreift.

8. Vorrichtung (H) nach einem der Ansprüche 1 bis 7, **dadurch gekennzeichnet, dass** die Vorrichtung (H) an der äusseren Seite ihres ersten Schenkels (S1), d.h. an der einem eingerasteten Wellrohr (W) abgewandten Seite des ersten Schenkels (S1), eine erste Aussen- Einrastrippe (AR1) aufweist, die in eine Wellrohr-Vertiefung eines Wellrohrs (W) eingreifen kann und optional, dass die Vorrichtung (H) an der äusseren Seite ihres zweiten Schenkels (S2), d.h. an der einem eingerasteten Wellrohr (W) abgewandten Seite des zweiten Schenkels (S2), eine zweite Aussen-Einrastrippe (AR2) aufweist, die in eine Wellrohr-Vertiefung eines Wellrohrs (W) eingreifen kann.

9. Vorrichtung (H) nach einem der Ansprüche 1 bis 8, **dadurch gekennzeichnet, dass** die Wellrohr-Einrastformation (S1, S2) zur Aussenkontur (C) eines Wellrohres (W) mit kreisförmigem Querschnitt komplementär ist, oder dass die Wellrohr-Einrastformation (S1, S2) zur Aussenkontur (C) eines Wellrohres (W) mit rechteckförmigem Querschnitt komplementär ist, oder dass die Wellrohr-Einrastformation (S1, S2) zur Aussenkontur (C) eines Wellrohres (W) komplementär ist, das einen stadionförmigen oder rennbahnförmigen Querschnitt bzw. einen Querschnitt in Form eines Rechtecks mit abgerundeten Ecken hat.

10. Vorrichtung (H) nach einem der Ansprüche 1 bis 9, **dadurch gekennzeichnet, dass** die Vorrichtung an der äusseren Seite ihres Basisbereichs (B) eine vordere Befestigungslasche (LV) aufweist, die sich in eine erste Richtung von der Vorrichtung (H) weg erstreckt und optional, dass die Vorrichtung an der äusseren Seite ihres Basisbereichs (B) eine hintere Befestigungslasche (LH) aufweist, die sich in eine zu der ersten Richtung entgegengesetzte zweite Richtung von der Vorrichtung (H) weg erstreckt, wobei vorzugsweise die vordere Befestigungslasche (LV) mindestens zwei Befestigungslöcher und/oder die hintere Befestigungslasche (LH) mindestens zwei Befestigungslöcher aufweist.

11. Vorrichtung (H) nach einem der Ansprüche 1 bis 10, **dadurch gekennzeichnet, dass** die Vorrichtung (H) aus einem Polymermaterial, insbesondere aus einem faserverstärkten Polymermaterial gefertigt ist.

12. System zum Halten oder Befestigen mehrerer Wellrohre an einer festen Oberfläche (F), wobei das System mehrere miteinander verbundene Vorrichtungen gemäss einem der Ansprüche 1 bis 11 aufweist.

13. System nach Anspruch 12, **dadurch gekennzeichnet, dass** es mehrere nebeneinander angeordnete Vorrichtungen aufweist, wobei aneinandergrenzende Vorrichtungen jeweils mittels einer ersten Vorrichtung- Verbindungsformation (C1) einer ersten Vorrichtung und mittels einer zweiten Vorrichtung-Verbindungsformation (C2) einer benachbarten Vorrichtung, welche zu der ersten Vorrichtung-Verbindungsformation (C1) komplementär ist, miteinander verbunden sind.

14. System nach Anspruch 13, **dadurch gekennzeichnet, dass** es mehrere übereinander angeordnete Vorrichtungen aufweist, wobei aneinandergrenzende Vorrichtungen jeweils mittels der dritten Vorrichtung-Verbindungsformation (C3) einer ersten Vorrichtung und mittels der vierten Vorrichtung-Verbindungsformation (C4) einer benachbarten Vorrichtung, welche zu der dritten Vorrichtung- Verbindungsformation (C3) komplementär ist, miteinander verbunden sind.

## Claims

1. Device (H) for holding or fastening a corrugated tube (W) on or to a solid surface (F), wherein the device (H) has a corrugated tube latching formation (S1, S2) which is complementary to the outer contour (C) of the corrugated tube (W), wherein, in a elastically non-deformed state or in a first elastically deformed state with a first deformation D1, the device (H) can be in form-fitting engagement with the corrugated tube (W), and wherein, as it is brought into engagement with the corrugated tube (W) and as it is brought out of engagement with the corrugated tube (W), the device (H) passes through a second elastically deformed state with a second deformation D2, wherein the second elastic deformation D2 is greater than the first elastic deformation D1; wherein the corrugated tube latching formation (S1, S2) has a first limb (S1) and a second limb (S2), which are connected to each other in one piece in a base area (B) of the device (H), wherein the first limb (S1) has a first limb end region (ES1) and the second limb (S2) has a second limb end region (ES2), wherein the two limb end regions (ES1, ES2) are arranged opposite each other and wherein, between the first limb end region (ES1) and the second limb end region (ES2), a corrugated tube (W) can be brought into engagement and out of engagement with the device (H) with elastic deformation of the two limbs (S1, S2) and while passing through the second elastically deformed state with the second elastic deformation D2; **characterized in that** the device (H) has a third device connecting formation (C3) on the outer side of at least one of its two limbs (S1, S2) and, in its base area (B), has a fourth device connecting formation (C4), which is complementary to the third device connecting formation (C3) and permits the device to be connected to the third device connecting formation (C3) of a second device arranged offset laterally underneath it.

2. Device (H) according to Claim 1, **characterized in that** the device (H) has a locking means (V) for locking the corrugated tube latching formation (S1, S2).

3. Device (H) according to Claim 2, **characterized in that** the locking means (V) has a first locking formation (V1) and a second locking formation (V2), **in that** the first limb end region (ES1) has a locking formation (V1') complementary to the first locking formation (V1), and **in that** the second limb end region (ES2) has a locking formation (V2') complementary to the second locking formation (V2).

4. Device (H) according to Claim 3, **characterized in that** the first locking formation (V1), together with the locking formation (V1') that is complementary to it, form a first locking latching formation (V1-V1'), and the second locking formation (V2), together with the locking formation (V2') that is complementary to it, form a second locking latching formation (V2-V2').

5. Device (H) according to one of Claims 1 to 4, **characterized in that** the device (H) has a first device connecting formation (C1) on the outer side of its first limb (S1), i.e. on the side of the first limb (S1) that faces away from a corrugated tube (W) that has been latched in, and has a second device connecting formation (C2), which is complementary to the first device connecting formation (C1), on the outer side of its second limb (S2), i.e. on the side of the second limb (S2) that faces away from a corrugated tube (W) that has been latched in.

6. Device (H) according to one of Claims 1 to 5, **characterized in that** the device (H) has on the inner side of its first limb (S1), i.e. on the side of the first limb (S1) that faces a corrugated tube (W) that has been latched in, a first inner latching rib (IR1), which engages in a corrugated tube recess of a corrugated tube (W) that has been latched in the device (H).

7. Device (H) according to Claim 6, **characterized in that** the device (H) has on the inner side of its second limb (S2), i.e. on the side of the second limb (S2) that faces a corrugated tube (W) that has been latched in, a second inner latching rib (IR2), which engages in a corrugated tube recess of a corrugated tube (W) that has been latched in the device (H).

8. Device (H) according to one of Claims 1 to 7, **characterized in that** the device (H) has on the outer side of its first limb (S1), i.e. on the side of the first limb (S1) that faces away from a corrugated tube (W) that has been latched in, a first outer latching rib (AR1), which can engage in a corrugated tube recess of a corrugated tube (W) and, optionally, **in that** the device (H) has on the outer side of its second limb (S2), i.e. on the side of the second limb (S2) that faces away from a corrugated tube (W) that has been latched in, a second outer latching rib (AR2), which can engage in a corrugated tube recess of a corrugated tube (W).

9. Device (H) according to one of Claims 1 to 8, **characterized in that** the corrugated tube latching formation (S1, S2) is complementary to the outer contour (C) of a corrugated tube (W) having a circular cross section, or **in that** the corrugated tube latching formation (S1, S2) is complementary to the outer contour (C) of a corrugated tube (W) having a rectangular cross section, or **in that** the corrugated tube latching formation (S1, S2) is complementary to the outer contour (C) of a corrugated tube (W) which has a stadium-shaped or racetrack-shaped cross section or a cross section in the form of a rectangle with rounded corners.

10. Device (H) according to one of Claims 1 to 9, **characterized in that** the device has a front fastening lug (LV) on the outer side of its base area (B), which extends away from the device (H) in a first direction and, optionally, **in that** the device has a rear fastening lug (LH) on the outer side of its base area (B), which extends away from the device (H) in a second direction that is opposite to the first direction, wherein, preferably, the front fastening lug (LV) has at least two fastening holes and/or the rear fastening lug (LH) has at least two fastening holes.

11. Device (H) according to one of Claims 1 to 10, **characterized in that** the device (H) is made of a polymer material, in particular of a fibre-reinforced polymer material.

12. System for holding or fastening a plurality of corrugated tubes on or to a solid surface (F), wherein the system has a plurality of connected devices according to one of Claims 1 to 11.

13. System according to Claim 12, **characterized in that** it has a plurality of devices arranged beside one another, wherein adjoining devices are each connected to one another by means of a first device connecting formation (C1) of a first device and by means of a second device connecting formation (C2) of an adjacent device which is complementary to the first device connecting formation (C1).

14. System according to Claim 13, **characterized in that** it has a plurality of devices arranged above one another, wherein adjacent devices are each connected to one another by means of the third device connecting formation (C3) of a first device and by means of the fourth device connecting formation (C4) of an adjacent device which is complementary to the third device connecting formation (C3) .

## Revendications

1. Dispositif (H) pour maintenir ou fixer un tube ondulé (W) sur une surface rigide (F), le dispositif (H) présentant une formation d'encliquetage pour tube ondulé (S1, S2) qui est complémentaire du contour extérieur (C) du tube ondulé (W), le dispositif (H) étant apte à venir en prise par engagement par complémentarité de forme avec le tube ondulé (W) dans un état non déformé élastiquement ou dans un premier état déformé élastiquement avec une première déformation D1, et le dispositif (H) passant par un deuxième état déformé élastiquement avec une deuxième déformation D2 lors de l'engagement avec le tube ondulé (W) et lors du désengagement d'avec le tube ondulé (W), la deuxième déformation élastique étant plus grande que la première déformation élastique D1 ; la formation d'encliquetage de tube ondulé (S1, S2) présentant une première branche (S1) et une deuxième branche (S2) qui sont reliées entre elles d'un seul tenant dans une zone de base (B) du dispositif (H), la première branche (S1) présentant une première zone d'extrémité de branche (ES1) et la deuxième branche (S2) présentant une deuxième zone d'extrémité de branche (ES2), les deux zones d'extrémité de branche (ES1, ES2) étant disposées l'une en face de l'autre, et, entre la première zone d'extrémité de branche (ES1) et la deuxième zone d'extrémité de branche (ES2), un tube ondulé (W) est apte à être mis en engagement et en désengagement avec le dispositif (H) en déformant élastiquement les deux branches (S1, S2) et en passant par le deuxième état déformé élastiquement avec la deuxième déformation élastique D2 ; **caractérisé en ce que** le dispositif (H) comporte sur la face externe d'au moins une de ses deux branches (S1, S2) une troisième formation d'assemblage de dispositif (C3) et comporte dans sa zone de base (B) une quatrième formation d'assemblage de dispositif (C4) complémentaire de la troisième formation d'assemblage de dispositif (C3) et permettant de relier le dispositif à la troisième formation d'assemblage de dispositif (C3) d'un deuxième dispositif décalé latéralement sous celui-ci.

2. Dispositif (H) selon la revendication 1, **caractérisé en ce que** le dispositif (H) comprend un moyen de verrouillage (V) pour verrouiller la formation d'encliquetage de tubes ondulés (S1, S2).

3. Dispositif (H) selon la revendication 2, **caractérisé en ce que** le moyen de verrouillage (V) comprend une première formation de verrouillage (V1) et une deuxième formation de verrouillage (V2), **en ce que** la première zone d'extrémité de branche (ES1) comprend une formation de verrouillage (V1') complémentaire à la première formation de verrouillage (V1), et **en ce que** la deuxième zone d'extrémité de branche (ES2) comprend une formation de verrouillage (V2') complémentaire à la deuxième formation de verrouillage (V2).

4. Dispositif (H) selon la revendication 3, **caractérisé en ce que** la première formation de verrouillage (V1) forme, avec la formation de verrouillage (V1') qui lui est complémentaire, une première formation d'encliquetage de verrouillage (V1-V1') et la deuxième formation de verrouillage (V2) forme, avec la formation de verrouillage (V2') qui lui est complémentaire, une deuxième formation d'encliquetage de verrouillage (V2-V2').

5. Dispositif (H) selon l'une quelconque des revendications 1 à 4, **caractérisé en ce que** le dispositif (H) présente, sur le côté extérieur de sa première branche (S1), c'est-à-dire sur le côté de la première branche (S1) opposé à un tube ondulé (W) engagé, une première formation d'assemblage de dispositif (C1) et présente, sur le côté extérieur de sa deuxième branche (S2), c'est-à-dire sur le côté opposé à un tube ondulé (W) engagé, une deuxième formation d'assemblage de dispositif (C2), qui est complémentaire à la première formation d'assemblage de dispositif (C1).

6. Dispositif (H) selon l'une des revendications 1 à 5, **caractérisé en ce que** le dispositif (H) comporte, sur la face interne de sa première branche (S1), c'est-à-dire sur la face de la première branche (S1) tournée vers un tube ondulé (W) engagé, une première nervure d'encliquetage interne (IR1) qui s'engage dans une cavité de tube ondulé d'un tube ondulé (W) engagé dans le dispositif (H).

7. Dispositif (H) selon la revendication 6, **caractérisé en ce que** le dispositif (H) présente sur le côté intérieur de sa deuxième branche (S2), c'est-à-dire sur le côté de la deuxième branche (S2) tourné vers un tube ondulé (W) engagé, une deuxième nervure d'encliquetage intérieure (IR2) qui s'engage dans un creux de tube ondulé d'un tube ondulé (W) engagé dans le dispositif (H).

8. Dispositif (H) selon l'une des revendications 1 à 7, **caractérisé en ce que** le dispositif (H) présente sur le côté extérieur de sa première branche (S1), c'est-à-dire sur le côté de la première branche (S1) opposé à un tube ondulé (W) engagé, une première nervure d'encliquetage extérieure (AR1) qui est apte à s'engager dans un creux de tube ondulé d'un tube ondulé (W) et optionnellement **en ce que** le dispositif (H) présente sur le côté extérieur de sa deuxième branche (S2), c'est-à-dire sur le côté de la deuxième branche (S2) opposé à un tube ondulé (W) engagé, une deuxième nervure d'encliquetage extérieure (AR2) qui est apte à s'engager dans un creux de tube ondulé (W).

9. Dispositif (H) selon l'une des revendications 1 à 8, **caractérisé en ce que** la formation d'encliquetage de tube ondulé (S1, S2) est complémentaire du contour extérieur (C) d'un tube ondulé (W) de section transversale circulaire, , ou **en ce que** la formation d'encliquetage de tube ondulé (S1, S2) est complémentaire au contour extérieur (C) d'un tube ondulé (W) de section transversale rectangulaire, ou **en ce que** la formation d'encliquetage de tube ondulé (S1, S2) est complémentaire au contour extérieur (C) d'un tube ondulé (W) qui présente une section transversale en forme de stade ou de piste de course ou une section transversale en forme de rectangle aux coins arrondis.

10. Dispositif (H) selon l'une quelconque des revendications 1 à 9, **caractérisé en ce que** le dispositif comporte, sur le côté extérieur de sa partie de base (B), une patte de fixation avant (LV) s'étendant dans une première direction allant à l'opposé du dispositif (H) et, optionnellement, **en ce que** le dispositif comporte, sur le côté extérieur de sa partie de base (B), une patte de fixation arrière (LH), qui s'étend dans une deuxième direction opposée à la première direction en s'éloignant du dispositif (H), de préférence la patte de fixation avant (LV) comportant au moins deux trous de fixation et/ou la patte de fixation arrière (LH) comportant au moins deux trous de fixation.

11. Dispositif (H) selon l'une des revendications 1 à 10, **caractérisé en ce que** le dispositif (H) est réalisé en un matériau polymère, notamment en un matériau polymère renforcé par des fibres.

12. Système de maintien ou de fixation de plusieurs tubes ondulés sur une surface fixe (F), ledit système comprenant plusieurs dispositifs interconnectés selon l'une quelconque des revendications 1 à 11.

13. Système selon la revendication 12, **caractérisé en ce qu'**il comprend une pluralité de dispositifs disposés côte à côte, des dispositifs adjacents étant respectivement reliés entre eux au moyen d'une première formation d'assemblage de dispositif (C1) d'un premier dispositif et au moyen d'une deuxième formation d'assemblage de dispositif (C2) d'un dispositif adjacent, complémentaire de la première formation d'assemblage de dispositif (C1).

14. Système selon la revendication 13, **caractérisé en ce qu'**il comprend une pluralité de dispositifs disposés les uns au-dessus des autres, des dispositifs adjacents étant respectivement reliés entre eux au moyen de la troisième formation d'assemblage de dispositif (C3) d'un premier dispositif et au moyen de la quatrième formation d'assemblage de dispositif (C4) d'un dispositif adjacent qui est complémentaire de la troisième formation d'assemblage de dispositif (C3).
